# NEUE EUROPÄISCHE PATENTSCHRIFT

(11) **EP 0 264 476 B2**
(45) Veröffentlichungstag und Bekanntmachung des Hinweises auf die Entscheidung über den Einspruch: **24.01.1996**
(45) Hinweis auf die Patenterteilung: 06.03.1991
(21) Anmeldenummer: 86114633.0
(22) Anmeldetag: 22.10.1986
(51) Int. Cl.: B23D 37/00

(54) **Maschine insbesondere zum Drehräumen von Pleuellagern an mehrhübigen Kurbelwellen**
Machine, in particular for turn-broaching crankpin bearings of multiple cranked crankshafts
Machine en particulier pour le brochage par rotation des manetons de vilebrequins coudés plusieurs fois

(43) Veröffentlichungstag der Anmeldung: 27.04.1988
(73) Patentinhaber: Wilhelm Hegenscheidt Gesellschaft mbH, D-41804 Erkelenz (DE)
(72) Erfinder: Berstein, Garri, Dr.-Ing., D-5140 Erkelenz (DE); Obrig, Hans W., Dr.-Ing., D-4300 Essen (DE); Wittkopp, Helmut, Dipl.-Ing., D-5140 Erkelenz (DE); Wolters, Hermanns, Dipl.-Ing., D-4050 Mönchengladbach 4 (DE)
(74) Vertreter: Aubele, Karl B.

(56) Entgegenhaltungen:
- EP-A- 0 195 165
- DE-C- 2 846 843
- DE-C- 3 101 924
- DE-C- 3 204 987
- FR-A- 2 306 769
- GB-A- 2 130 135
- US-A- 2 769 235
- MASCHINENMARKT, Band 92, Nr. 34, August 1986, Seiten 24-28, Würzburg; M. MÜLLER et al.: "Zerspankraft kompensieren"
- "Werkstatt und Betrieb" 119 (1986) 7, Seiten 563-566, E. Anschütz & F. Tikal:"Drehräumen- ein fortschrittliches Fertigungsverfahren"
- "Industrieanzeiger" Nr. 56/57 vom 18.07.86/108, Seite 37
- "Röhm- Betriebsanleitung für Kraftspannfutter KFD-HF", RN-1183, September 1982
- "Röhm-Dreibacken-Kraftspannfutter KFD-HF mit Fliehkraftausgleich", Juli 1983
- H. Matuszewski:"Hanbuch Vorrichtungen", Friedr. Vieweg & Sohn, Braunschweig 1986, Seite 209
- K. Schreyer:"Werkstückspanner", Springer-Verlag, 1959, Seite 48

## Beschreibung

Die Erfindung betrifft eine Maschine zum Drehräumen mindestens von Pleuellagern an Kurbelwellen mit einer Einrichtung für die Aufnahme und den Drehantrieb einer Kurbelwelle, mindestens einem mit dem Werkstück in Arbeitskontakt bringbaren Drehräumwerkzeug und einer Maschinensteuerung sowie mit mindestens einer Lünette mit einer umlaufenden Stützeinrichtung.

Die Bearbeitung von biegungsempfindlichen oder schwingungsempfindlichen Werkstücken wie z.B. Kurbelwellen durch Drehräumen bereitet große Schwierigkeiten, weil die Drehräumwerkzeuge während der Bearbeitung sowohl eine beträchtliche Radialkraft als auch eine beträchtliche Tangentialkraft auf das Werkstück ausüben und dieses damit durchbiegen. Dieses Problem tritt insbesondere bei der Drehbearbeitung langer Kurbelwellen auf. Die genannte Problematik ist angesprochen in dem Aufsatz "Zerspankraft kompensieren" in der Zeitschrift "Maschinenmarkt" (1986) Nr. 34, Seite 28, Bild 8, mittlere Spalte und zugehöriger Text rechte Spalte. Bild 8 zeigt die Bearbeitung einer Kurbelwelle durch sogenannte Rotations-Drehräumwerkzeuge, wobei die genannten Werkzeuge symmetrisch verteilt in Umfangsrichtung um den zu bearbeitenden Kurbelwellenzapfen angeordnet sind. Alle drei Werkzeuge bearbeiten gleichzeitig diesen Kurbelwellenzapfen.
Im zugehörigen Text ist ausgesagt: "Die Grenzen des Verfahrens sind dort zu sehen, wo infolge Durchbiegung des Werkstückes aufgrund der Zerspankraft und der Massenkräfte die benötigten Toleranzen nicht mehr eingehalten werden können.
Maßnahmen, um diese Grenzen möglichst weit zu strecken, können auf Werkzeug- und Maschinenseite getroffen werden. Bild 8 zeigt eine Anordnung, bei der die gesamte Zahl der Werkzeugschneiden auf drei Segmente aufgeteilt ist. Bei sinnvoller Anordnung der einzelnen Wendeplatten auf den jeweiligen Grundkörpern können bei dieser Konfiguration die auf die Kurbelwelle wirkende resultierende Zerspankraft und die Massenkräfte kompensiert werden. Mit der Konstruktion (Bild 8) ist es möglich, auch labile Werkstücke zu bearbeiten, bei denen Drehräumen bisher nicht möglich war."

Das im Stand der Technik beschriebene Verfahren ist nur einsetzbar bei relativ gut ausgewuchteten Kurbelwellen und bei der Bearbeitung von Hauptlagerzapfen. Selbst unter diesen Voraussetzungen ist nur die Bearbeitung relativ kurzer Kurbelwellen möglich. Bei längeren Kurbelwellen führen die durch die Unwucht auftretenden Massenkräfte zu periodisch umlaufenden Zerspanungsschwankungen. Liegt gar eine extreme Unwucht vor wie sie auftritt, wenn die Drehachse der Kurbelwelle durch die zu bearbeitenden Pleuellager geht, ist die beschriebene Methode wegen der extrem großen Unwuchtkräfte nicht mehr anwendbar. Dies gilt bereits für relativ kurze Kurbelwellen. Trotz der Mehrfachanordnung der Werkzeuge an einem Kurbelwellenzapfen würde bei der für die Bearbeitung notwendigen Drehzahl die Kurbelwelle so stark verbiegen, daß eine unerwünschte Ungenauigkeit entsteht.

Die FR-A-2 306 769 zeigt eine Einrichtung für die Aufnahme und den Drehantrieb einer Kurbelwelle sowie eine Lünette mit einer umlaufenden Stützeinrichtung für die Kurbelwelle. Hierbei wird die Kurbelwelle an einem Lagerzapfen von einem geteilten, umlaufenden Teil in einer dem Lagerzapfen angepaßten Bohrung gehalten. Diese Art der Aufnahme setzt jedoch voraus, daß bereits mindestens eine Lagerstelle -ohne Abstützung- bearbeitet wurde zur Anpassung an die Aufnahmebohrung des umlaufenden Teils. Außerdem führen Bearbeitungstoleranzen dazu, daß der abzustützende Kurbelzapfen nicht spielfrei in seiner Aufnahme sitzt, so daß es bei einer zerspanenden Bearbeitung des Werkstückes zu Rattererscheinungen kommt.

Der Erfindung liegt somit die Aufgabe zugrunde, eine Maschine der eingangs beschriebenen Art vorzuschlagen, mit der es möglich ist, labile Werkstücke, insbesondere Kurbelwellen, ohne die Notwendigkeit einer zerspanenden Vorbearbeitung, durch eine Drehräumbearbeitung mit verbesserter Genauigkeit zu bearbeiten wobei auch die Be- und Entlastung der Maschine erleichtert sein soll.

Diese Aufgabe ist erfindungsgemäß bei einer Einrichtung der eingangs beschriebenen Art dadurch gelöst, daß die umlaufende Stützeinrichtung Stützelemente aufweist, die unter Kraft in Anlage mit exzentrisch zur Drehachse der Maschine umlaufenden Teilen einer Kurbelwelle, gebracht werden und daß die Stützelemente beweglich an der umlaufenden Stützeinrichtung und, als zweiseitige Hebel ausgebildet, um eine Achse parallel zur Drehachse schwenkbar an der umlaufenden Stützeinrichtung angeordnet sind derart, daß die Fliehkraft die Stützkraft mindestens unterstützt, wobei sowohl der Lünettenständer als auch die umlaufende Stützeinrichtung eine radial gerichtete, den Bereich der Drehachse umfassende Öffnung zur Entnahme und Einführung eines Werkstücks aufweist. Hierdurch wird es möglich, die umlaufenden Teile, die ja die Unwuchtkräfte erzeugen, sicher aufzunehmen und die entstehenden Kräfte in der zentrisch zur Drehachse umlaufenden Stützeinrichtung sicher aufzufangen. Trotz der großen Unwuchtkräfte kann daher eine unzulässige Durchbiegung der Kurbelwelle während der Bearbeitung verhindert werden. Die beschriebene Lünette ist hierbei an einer Drehräummaschine der eingangs beschriebenen Art angeordnet, von der die Kurbelwelle aufgenommen und bei Bedarf drehangetrieben wird. In einer solchen Anordnung wird die umlaufende Stützeinrichtung von der sich drehenden Kurbelwelle einfach mitgeschleppt. Somit können Unwuchtkräfte direkt dort aufgenommen werden wo sie entstehen, nämlich an exzentrisch umlaufenden Teilen. Außerdem wird das Einlegen eines Werkstücks in die Maschine bzw. die Entnahme eines fertigbearbeiteten Werkstückes aus der Maschine besonders einfach. Axiale Einfädelungen können vermieden werden. Erforderlich wird bei dieser Ausbildung allerdings eine Kontrolle der Winkellage der umlaufenden Stützeinrichtung und/oder des Werkstückes bzw. der Werkstückspindel an der Maschine. Dies ist ohne weiteres ersichtlich, weil einerseits in falscher Winkellage der radial gerichtete offene Bereiche der umlaufenden Stützeinrichtung nicht übereinstimmt mit dem entsprechenden offene Bereich des Lünettenständers, so daß das Werkstück radial nicht entnommen werden könnte und weil andererseits eine evtl. zugeordnete Zuführeinrichtung ein Werkstück immer in gleicher Verfahrrichtung entnimmt, so daß die radial gerichteten Öffnungen bei dem Werkstückwechsel so stehen müssen, daß der Werkstückwechsel für eine evtl. zugeordnete Zuführeinrichtung möglich ist.

Das beschriebene Mitschleppen der umlaufenden Stützeinrichtung kann aus verschiedenen Gründen unerwünscht sein. Daher ist nach einer Ausbildung der Erfindung vorgeschlagen, daß die Lünette mit einem Antrieb für die umlaufende Stützeinrichtung ausgerüstet ist. Ein Mitschleppen der umlaufenden Stützeinrichtung ist dann nicht mehr erforderlich. Alle durch ein Mitschleppen evtl. entstehenden Nachteile sind damit behoben. Solche Nachteile können z.B. bei sehr langen Kurbelwellen die manchmal großen Massenkräfte der umlaufenden Stützeinrichtung sein, die möglicherweise Torsionsschwingungen in der Kurbelwelle während der Bearbeitung erzeugen.

Nach einer anderen Ausgestaltung der Erfindung ist vorgesehen, daß die Stützelemente lageveränderlich angeordnet sind. Hierdurch können sie sich an unterschiedliche Abmessungen des zu stützenden Werkstückes oder Werkstückbereiches anpassen. Die Flexibilität der Einrichtung wird hierdurch erhöht.

Ergänzend ist nach der Erfindung noch vorgeschlagen, daß die Lünette einen Unwuchtausgleich an der umlaufenden Stützeinrichtung aufweist. Hierdurch können insgesamt die Radialbelastungen in der Gesamtlünette klein gehalten werden, was günstige Auswirkungen auf die Dimensionierung der Bauteile hat, die die Radialkräfte aufnehmen müssen.

Wiederum eine Ausgestaltung der Erfindung sieht vor, daß die umlaufende Stützeinrichtung in einem Lünettenständer um ihre Drehachse drehbar gelagert und geführt angeordnet ist. Hierdurch wird eine selbständige Baueinheit geschaffen, die es bei Bedarf ermöglicht, auch bereits bestehende Maschinen nachzurüsten.

Eine ergänzende Ausgestaltung der Erfindung sieht vor, daß die umlaufende Stützeinrichtung an ihrer Umfangsfläche von im Ständer gelagerten und geführten Wälzkörpern abgestützt wird. Dies ist eine günstige Möglichkeit die notwendige radiale Abstützung und Führung reibungsarm zu gestalten. Gleichzeitig können von solchen Wälzkörpern radial große Kräfte aufgenommen werden.

Dadurch daß die Stützelemente beweglich an der umlaufenden Stützeinrichtung angeordnet sind derart, daß die Fliehkraft die Stützkraft mindestens unterstützt, gelingt es die Stützelemente zunächst leicht gängig zu gestalten, so daß es sehr einfach möglich wird das Werkstück zu wechseln. Die Stützkraft auf das Werkstück ist direkt abhängig von der Drehzahl, so daß mit zunehmender Drehzahl eine verbesserte Stützkraft äquivalent der sich vergrößernden Unwucht auftritt.

Schließlich ist nach der Erfindung noch vorgesehen, daß die Lünette entlang der Drehachse verstellbar angeordnet ist. Hierdurch kann die Lünette auf unterschiedliche Werkstücktypen eingerichtet werden.

Die Erfindung soll nun anhand der beigefügten Zeichnungen, in denen Ausführungsbeispiele dargestellt sind, näher beschrieben werden. Es zeigen:
- Figur 1: Ausschnitt Seitenansicht einer Lünette mit gebrochen gezeichnetem Ständer
- Figur 2: Schnitt 1-1 nach Figur 1
- Figur 3: Ansicht in Richtung des Pfeils A nach Figur 1
- Figur 4: Lünette wie Figur 1 jedoch mit angetriebener umlaufender Stützeinrichtung
- Figur 5: Schnitt 11-11 nach Figur 4
- Figur 6: Lünette wie Figur 1 oder Figur 4, jedoch mit in ortsfesten Rollen gelagerter umlaufender Stützeinrichtung
- Figur 7: Schnitt III-III nach Figur 6

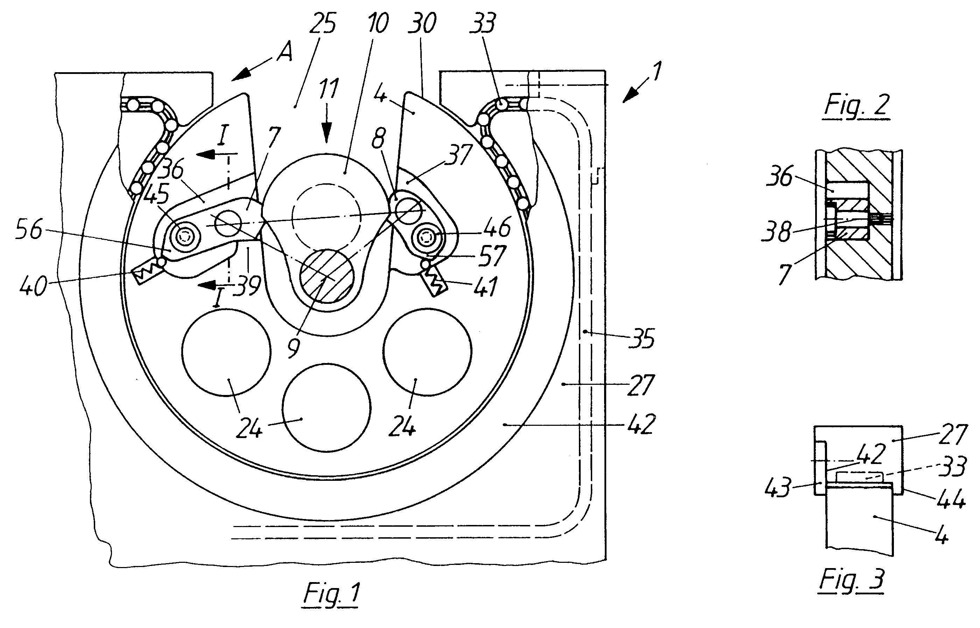

Figur 1 zeigt eine Lünette 1 mit einem Lünettenständer 27. Der Lünettenständer 27 ist nicht vollständig dargestellt. Dargestellt ist lediglich der für die Erfindung relevante Bereich des Lünettenkopfes mit der Lagerung für die umlaufende Stützeinrichtung 4. Die übrige Gestaltung des Lünettenständer 27 muß so sein, daß der Lünettenständer 27 am Maschinenbett einer für die Drehräumbearbeitung geeigneten Maschine angebracht werden kann. Bei Bedarf kann der Lünettenständer 27 seinerseits auch auf einem Bettschlitten der Drehräummaschine angeordnet sein. Er kann dann mit dem Bettschlitten entlang der Drehachse 9 verfahren werden. Natürlich kann auch der nicht dargestellte Fuß des Lünettenständers 27 direkt als Bettschlitten ausgebildet sein.

Im Kopfbereich des Lünettenständers 27 weist die Lünette 1 eine große Bohrung auf, die konzentrisch zur Drehachse 9 der Drehräummaschine verläuft. In dieser Bohrung ist die umlaufende Stützeinrichtung 4 angeordnet. Diese ist scheibenförmig ausgebildet und wird an ihrer Umfangsfläche 30 im Lünettenständer 27 radial geführt und drehbar gelagert. Hierzu befinden sich zwischen der Umfangsfläche 30 der umlaufenden Stützeinrichtung 4 und der entsprechenden Gegenfläche der Bohrung des Lünettenständers 27 Wälzkörper 33, die jedoch den Gesamtumfang der umlaufenden Stützeinrichtung 4 nicht vollständig umfassen. Sie können vielmehr die umlaufende Stützeinrichtung in einem Bereich von ca. 300° umfassen und werden dann über einen umlaufenden Kanal 35 wieder zurückgeführt. Der von den Wälzkörpern nicht umschlossene Bereich weist in Werstückwechsellage nach oben und es weist in diesem Bereich der Lünettenständer 27 eine Öffnung auf, die radial bis in die Bohrung hineinreicht, in welcher die umlaufende Stützeinrichtung 4 angeordnet ist.

Auch die umlaufende Stützeinrichtung 4 weist eine radial gerichtete und den Bereich der Drehachse 9 umfassende Öffnung 25 auf. Diese radial gerichtete Öffnung 25 ist ausreichend groß um einem zu bearbeitenden Werkstück, beispielsweise einer Kurbelwelle 11, so darin Platz zu bieten, daß diese Kurbelwelle 11 mit ihrem Pleuellagerzapfen in die Drehachse 9 der nicht gezeichneten Drehräummaschine gebracht werden kann. Es entsteht dann die in Figur 1 dargestellte Anordnung.

Als Masseausgleich für die fehlende Masse in der Öffnung 25 weist die umlaufende Stützeinrichtung Bohrungen 24 auf. Bei Bedarf können in die Bohrungung 24 auch Einsätze eingesetzt werden um einen möglichst genauen Masseausgleich zu schaffen.

Im Ausführungsbeispiel nach Figur 1 ist die Kurbelwelle 11 in der Öffnung 25 der umlaufenden Stützeinrichtung 4 angeordnete und wird in der dargestellten Lage von den Spanneinrichtungen der nicht dargestellten Drehräummaschine in deren Drehachse 9 gehalten und es wird von der Drehräummaschine die Kurbelwelle 11 auch drehangetrieben. Die Drehachse 9 der nicht dargestellten Drehräummaschine ist gleichzeititg die Drehachse der umlaufenden Stützeinrichtung 4.

In den Seitenbereichen der Öffnung 25 in sich gegenüber liegender Anordnung weist die umlaufende Stützeinrichtung 4 im Ausführungsbeispiel nach Figur 1 je eine einseitige Einsenkung 36 bzw. 37 auf. In dieser Einsenkung sind Stützelemente 7 bzw. 8 angeordnet, die als zweiseitige Hebel ausgebildet sind. Stützelement 7 ist hierbei um einen parallel zur Drehachse 9 angeordneten Lagerbolzen 38 in der Ebene der umlaufenden Stützeinrichtung 4 schwenkbar gelagert. In gleicher Weise ist auch s Stützelement 8 gelagert. Beide Stützelement weisen an der Vorderseite des in die Öffnung 25 hineinragende Hebelteils Flächen auf, die an entsprechende Paßflächen an der Kurbelwelle 11 anlegbar sind. Solche Paßflächen sind an zu fertigenden Kurbelwellen immer vorhanden oder problemlos anbringbar. Sie sind für die weitere Bearbeitung der Kurbelwelle ebenfalls notwendig.

In der dargestellten Anordnung liegen die Stützelemente 7 und 8 ordnungsgemäß an den entsprechenden Paßflächen der Kurbelwelle 11 im Bereich exzentrisch umlaufender Massen 10, z.B. den Kurbelwangen oder den Hauptlagerzapfen oder an anderen Stellen an, wobei hierdurch gleichzeitig die Unterseite des der Kurbelwelle zugewandten Hebelteils des Stützelementes 7 auf einem Anschlag oder Amboß 39 aufliegt. Ein solcher Anschlag 39 ist für das Stützelement 8 nicht vorhanden. Hierdurch wird eine statische Überbestimmung vermieden.

Der sich von dem Bereich der Öffnung 25 weg erstreckende Teil der Stützelemente 7 und 8 wirkt je an seinem Ende mit einer federnden Einrichtung 40 bzw. 41, zusammen die in der Zeichnung als federbelastete Kugel angedeutet ist. Ist das Werkstück, wie in Figur 1 dargestellte, richtig eingelegt und übernommen, dann sorgen die federnden Einrichtungen 40 und 41 dafür, daß die Stützelemente 7 und 8 mit einer entsprechenden Kraft so geschwenkt werden, daß auf das Werstück eine Kraft ausgeübt wird, die dieses in die Öffnung 25 hineinziehen will. Hierbei kommt jedoch das Stützelemente 7 am Anschlag 39 zur Anlage, so daß eine weitere Kraft auf das Werkstück 11 nicht ausgeübt werden kann. Dies gilt jedoch nicht für das Stützelement 8, das wegen des Fehlens eines entsprechenden Anschlages weiterhin eine Kraft auf das Werkstück 11 ausübt. Die Kraftrichtung ist jedoch so, daß die resultierende Kraft zwischen der Achse des Lagerbolzens 38 des Stützelementes 7 und der Drehachse 9 hindurch verläuft und daher keine bemerkbare Verformung des Werkstücks 11 verursacht. Die Kraftrichtung der Kraft, die von dem Stützelement 8 ausgeübt wird, ist um so günstiger, je näher diese an die Achse des Lagerbolzens 38 herankommt. Die Ideallage ist dann erreicht, wenn die Kraftrichtung durch die Achse des Lagerbolzens 38 hindurchgeht.

Wird nun die umlaufende Stützeinrichtung 4 durch einen Drehantrieb der Kurbelwelle 11 von der Drehräummaschine mit rundgedreht, so entsteht eine auf die Stützelemente 7 und 8 einwirkende Fliehkraft, die diese Stützelemente 7 und 8 veranlaßt die Kurbelwelle 11 in die Öffnung 25 radial hineinzuziehen. Von der Unwucht der Kurbelwelle geht eine entgegengesetzt gerichtete Kraft aus und es kann die ganze Einrichtung so ausgelegt werden, daß die genannten Kräfte sich kompensieren bzw. die Kräfte, die von den Stützelementen 7 und 8 auf die Kurbelwelle ausgeübt werden, leicht überwiegen. Damit ist die Kurbelwelle in der Maschine auch bei größter Unwucht sicher gehalten und es kann die bisher nicht mögliche Drehräumbearbeitung an Pleuellagerzapfen durchgeführt werden.

Obwohl eine Axialbelastung der umlaufenden Stützeinrichtung 4 während des Betriebes nicht auftritt, muß dennoch eine Axialführung für die umlaufende Stützeinrichtung 4 vorgesehen sein. Diese kann jedoch recht einfach gehalten werden. Ein Ausführungsbeispiel ist in Figur 3 dargestellt. Der Lünettenständer 27 weist um die für die Aufnahme der umlaufenden Stützeinrichtung 4 vorgesehene Öffnung eine Einsenkung 42 auf, in welche ein Anschlagring 42 eingesetzt ist. Auf der gegenüberliegenden Seite weist der Lünettenständer 27 einen entsprechenden Kragen 44 auf. Zwischen diesem Anschlagring 43 und dem Kragen 44 kann sich die umlaufende Stützeinrichtung 4 drehen und wird hierbei von den beiden genannten Elementen gegen axiale Verschiebung gehalten.

Ergänzend sei noch darauf hingewiesen, daß die Stützelemente 7 und 8 an ihren von der Öffnung 25 wegweisenden Hebelteilen auswechselbare Massen 45 und 46 aufweisen können, mit denen eine Anpassung der Haltekräfte an die Unwuchtkraft der zu haltenden Kurbe Iwelle erreicht werden kann.

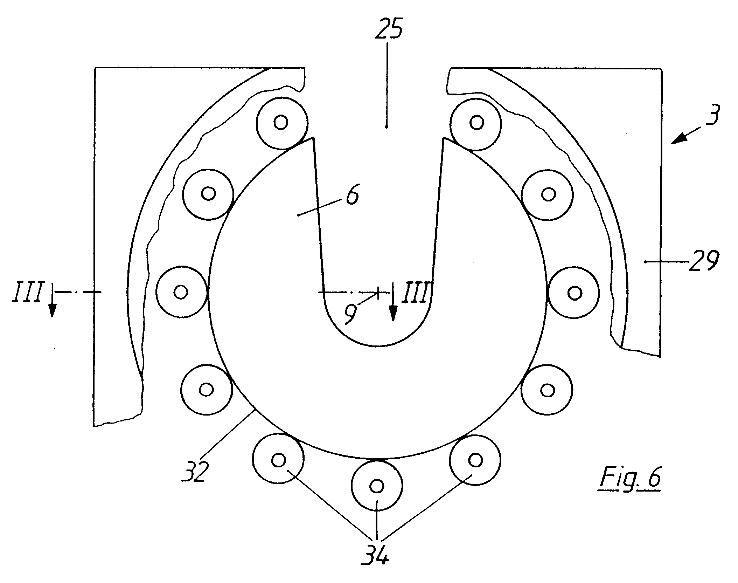

Figur 6 zeigt eine Lünette 3, die im wesentlichen so aufgebaut sein kann, wie die bereits beschriebene Lünette 1 nach den Figuren 1 bis 3. Das der umlaufenden Stützeinrichtung 4 bei Figur 6 entsprechende Bauteil 6 ist jedoch im zugeordneten Lünettenständer 29 nicht über die Wälzelemente 33 sondern vielmehr über ortsfeste Wälzelemente 34 gelagert. Diese Wälzelemente 34 sind ausgebildet als auf Achsen 37 drehbar gelagerte Rollen. Auf diesen Rollen läuft die Umfangsfläche 32 der umlaufenden Stützeinrichtung 6 ab. In dem Bereich in dem die Lünette 3 die nach oben gerichtete Öffnung für den Werkstückwechsel aufweist, haben die Rollen 34 in Umfangsrichtung einen solchen Abstand zueinander, daß sie die radial gerichtete Öffnung 25 der umlaufenden Stützeinrichtung 6 frei lassen, wie dies in Figur 6 dargestellt ist.

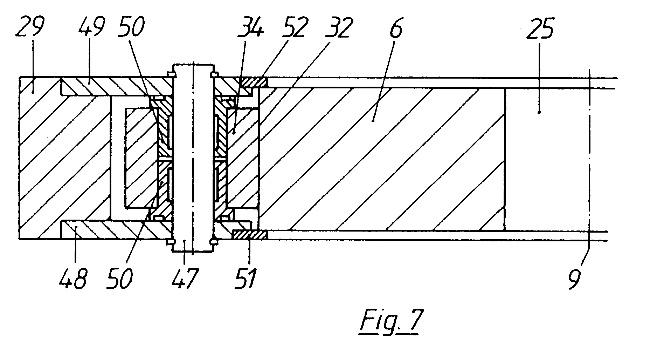

Die Rollenachsen 47 weisen zwei sogen. Radial-axiallager 50 auf, die auf ihrem radialen Lagerteil die Rolle 34 tragen in einer Anordnung wie in Figur 7 dargestellt. Die Bereiche dieser Lager, die für die axiale Abstützung und Lagerung dienen, führen die Rolle 34 axial und bilden gleichzeitig das Axiallager für die Drehbewegung der Rolle 34, wobei sich dieses Axiallager jeweils gegen die im Lünettenständer 29 angeordneten Ringe 48 bzw. 49 an deren Innenfläche abstützen. Die Ringe 48 bzw. 49 tragen ebenfalls die Achsen 47. Weitere Ringe 51 und 52 können für die axiale Sicherung der umlaufenden Stützeinrichtung 6 sorgen, wie dies bereits zu Figur 3 beschrieben wurde.

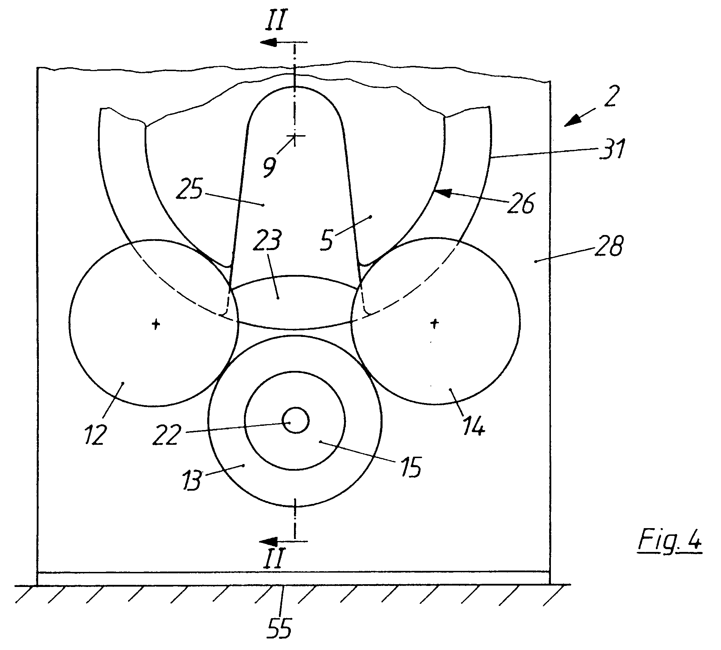

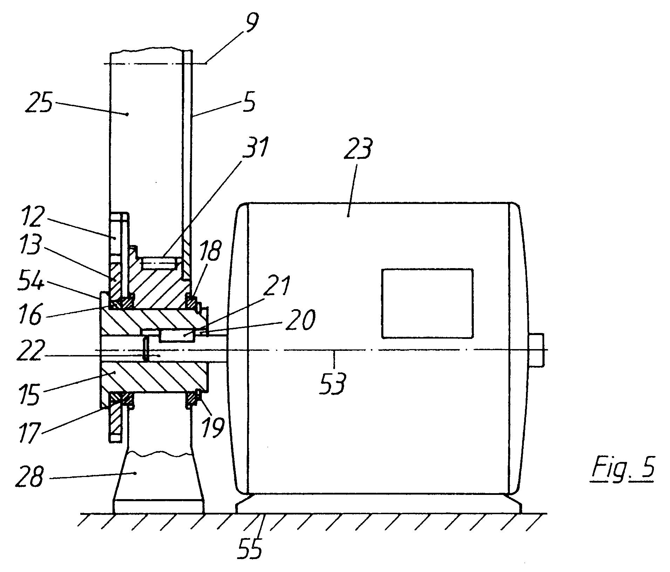

Die Ausführungsform einer Lünette 2 nach den Figuren 4 und 5 zeigt eine angetriebene Lünette. Auch hier ist in einem Lünettenständer 28 wiederum eine umlaufende Stützeinrichtung 5 drehbar angeordnet. Diese umlaufende Stützeinrichtung 5 kann im Prinzip so aufgebaut sein wie die bereits beschriebenen umlaufenden Stützeinrichtungen 4 und 6 und kann auch in der zu den Figuren 1 bis 3 und 6 und 7 bereits beschriebenen Weise gelagert sein. Zusätzlich weist die umlaufende Stützeinrichtung 5 jedoch mindestens einseitig einen sich axial erstreckenden Zahnkranz 26 auf, der mit Zahnrädern 12 und 14 kämmt, die untereinander gleich groß sind. Die Zahnräder 12 und 14 sind drehbar aber axial unverschieblich in entsprechender Position im Lünettenständer 28 angeordnet. Sie weisen in Umfangsrichtung des Zahnkranzes 26 gesehen einen solchen Abstand auf, daß bei Durchlauf der radial gerichteten Öffnung 25 immer mindestens ein Zahnrad 12 oder 14 im Eingriff mit dem Zahnkranz 26 bleibt. Die Zahnräder 12 und 14 kämmen beide gleichzeitig mit einem weiteren Zahnrad 13, das von einem Motor 23 drehangetrieben ist. Beide Zahnräder 12 und 14 haben daher stets gleiche Drehgeschwindigkeit. Kommt nun während der Drehbewegung ein Zahnrad 12 oder 14 in den Bereich der radial gerichteten Öffnung 25, in dem ja der Zahnkranz 26 unterbrochen ist, so dreht es sich gleichwohl mit unveränderter Geschwindigkeit weiter und kommt daher wieder in korrekten Zaheingriff mit dem Zahnkranz 26 wenn die radial gerichtete Öffnung 25 sich weiter gedreht hat.

Um den Antrieb durchzuführen ist das Zahnrad 13 über eine Paßfeder 16 drehfest auf einer Lagerbuchse 15 angeordnet. Die Lagerbuchse 15 ist ihrerseits drehbar im Lünettenständer 28 mit einer Drehachse 53 angeordnet, die parallel ist zur Drehachse 9. Außen weist die Lagerbuchse 15 einen Kragen 54 auf, der an der äußeren Stirnseite des Zahnrades 13 zur Anlage kommt. Auf der Rückseite des Zahnrades 13 ist ein Gleitring 17 angeordnet, der einerseits am Zahnrad und andererseits an einer entsprechenden Gegenfläche des Lünettenständers 28 anliegt. Auf der gegenüberliegenden Stirnseite des Lünettenständers 28 weist die Lagerbuchse 15 einen weiteren Gleitring 18 auf, der axial mit einem Sprengring 19 gesichert ist. Auf diese Art und Weise ist die Lagerbuchse 15 drehbar aber axial unverschiebbar im Lünettenständer 28 geführt. Gleiches gilt für das Zahnrad 13.

Die Lagerbuchse 15 weist koaxial zur Drehachse 53 eine nicht näher bezeichnete Bohru ng auf, in welche die Motorwelle 22 des Motors 23 eingesetzt ist. Die drehfeste Verbindung zwischen Motorwelle 22 und Lagerbuchse 15 wird in üblicher Weise über eine Paßfedernut 20 mit einer Paßfeder 21 hergestellt. Über den Motor 23 kann damit die umlaufende Stützeinrichtung 5 in Drehung versetzt werden. In Figur 4 sind der Einfachheit halber der Zahnkranz 26 und die Zahnräder 12,13 und 14 jeweils nur in der Form ihrer Teilkreise dargestellt. Da die Funktion von Zahnrädern und deren Inandergreifen allgemein bekannt ist, kann auf eine detaillierte Darstellung der Zähne verzichtet werden.

Der Lünettenständer 28 und der Motor 23 können auf einer gemeinsamen Unterlage 55 angeordnet sein. Diese Unterlage 55 kann ein Maschinenbett oder die Oberfläche eines Schlittens auf einem Maschinenbett sein. Hierdurch wird die gesamte Einrichtung in Richtung der Achse 9 verschiebbar und kann damit auf unterschiedliche Abstützpositionen oder Arbeitspositionen entlang des Werkstückes ausgerichtet werden.

In der Figur 1 dargestellten Anordnung kann die Kurbelwelle 11 mit ihren exzentrisch angeordneten einzuspannenden Teilen 10 einfach durch radialen Zug entnommen werden. Durch einen solchen radialen Zug nach Lösen der entsprechenden Aufnahmeeinrichtungen an der Drehräummaschine werden die Stützelemente 7 und 8 um ihre jeweiligen Achsen, also beim Stützelement 7 um die Achse 38, geschwenkt, wodurch die federnden Einrichtungen 40 und 41 bis zu einem bestimmten Wert Widerstand leisten solange, bis die Nocken 56 bzw. 57 überschritten sind. Danach wird die für die Entnahme des Werkstücks notwendige Drehbewegung der Stützelemente 7 und 8 von den federnden Einrichtungen 40 und 41 unterstützt und es bleiben nach der Entnahme des Werkstückes 11 die Stützelemente 7 und 8 in einer "Offen-Stellung".

Ein neues Werkstück 11 kann nun in umgekehrter Richtung eingelegt werden, wodurch die Stützelemente 7 und 8 in ihre in Figur 1 dargestellte Ausgangslage zurückgedrückt werden. Dabei überschreiten die Nocken 56 bzw. 57 wieder die federnden Einrichtungen 40 und 41. Nach dieser Überschreitung werden die Stützelemente 7 und 8 wieder in Schließstellung gedrückt von den federnden Elementen 40 und 41.

Für die sichere Halterung des Werkstückes 11 innerhalb einer umlaufenden Stützeinrichtung 4 bzw. 5 bzw. 6 sind jedoch auch andere Lösungen denkbar. Es kommt für die Lünette nur darauf an, daß diese eine Einrichtung aufweist, die einerseits zentrisch zur Drehachse der zugeordneten Drehräummaschine rotieren kann und die andererseits in dieser Einrichtung exzentrisch umlaufende Teile des Werkstückes bzw. der Kurbelwelle relativ zu dieser umlaufenden Einrichtung fixieren kann. Hierbei ist nur eine radiale Fixierung erforderlich. Auf eine axiale Fixierung des Werkstückes kann verzichtet werden.

Wird eine Drehräummaschine mit einer solchen Lünette ausgestattet so wird es erstmals möglich, stark unwuchtige Werkstücke, insbesondere Kurbelwellen, ausreichend sicher für ein Drehräumbearbeitung zu führen. Solche Lünetten können hierbei auch in mehrfacher Anordnung entlang der Drehachse 9 einer Drehräummaschine vorgesehen sein.

Damit spielt die Länge des Werkstückes und die Biegesteifigkeit des Werkstückes oder die Schwingungsanfälligkeit des Werkstückes für die Frage der Drehräumbearbeitung keine Rolle mehr.

Es versteht sich von selbst, daß die Lünetten an der Drehräummaschine so angeordnet sein m üssen, daß die Arbeitsbewegung der Drehräumwerkzeuge nicht behindert wird. Die hierzu notwendige Form der Lünettenständer ist von der Bauart der jeweils verwendeten Drehräummaschine abhängig. Die entsprechende Gestaltung kann daher dem durchschnittlichen Fachmann überlassen werden.

### Liste der verwendeten Bezugszeichen

- 1: Lünette
- 2: Lünette
- 3: Lünette
- 4: umlaufende Stützeinrichtung
- 5: umlaufende Stützeinrichtung
- 6: umlaufende Stützeinrichtung
- 7: Stützelement
- 8: Stützelement
- 9: Drehachse
- 10: exzentrische Teile des Werkstückes
- 11: Kurbelwelle
- 12: Zahnrad
- 13: Zahnrad
- 14: Zahnrad
- 15: Lagerbuchse
- 16: Paßfeder
- 17: Gleitring
- 18: Gleitring
- 19: Sprengring
- 20: Paßfedernut
- 21: Paßfeder
- 22: Motorwelle
- 23: Motor
- 24: Bohrungen
- 25: Öffnung
- 26: Zahnkranz
- 27: Lünettenständer
- 28: Lünettenständer
- 29: Lünettenständer
- 30: Umfangsfläche
- 31: Umfangsfläche
- 32: Umfangsfläche
- 33: Wälzkörper
- 34: Wälzkörper
- 35: umlaufender Kanal
- 36: einseitige Einsenkung
- 37: einseitige Einsenkung
- 38: Lagerbolzen
- 39: Anschlag
- 40: federnde Einrichtung
- 41: federnde Einrichtung
- 42: Einsenkung
- 43: Anschlagring
- 44: Kragen
- 45: auswechselbare Masse
- 46: auswechselbare Masse
- 47: Achse
- 48: Ringe
- 49: Ringe
- 50: Radial-axial-Lager
- 51: Ring
- 52: Ring
- 53: Drehachse
- 54: Kragen
- 55: Unterlage

## Patentansprüche

1. Maschine zum Drehräumen mindestens von Pleuellagern an Kurbelwellen (11) mit einer Einrichtung für die Aufnahme und den Drehantrieb einer Kurbelwelle, mindestens einem mit dem Werkstück in Arbeitskontakt bringbaren Drehräumwerkzeug und einer Maschinensteuerung sowie mit mindestens einer Lünette (1,2,3,) mit einer umlaufenden Stützeinrichtung (4,5,6) dadurch gekennzeichnet, daß die umlaufende Stützeinrichtung (4,5,6) Stützelemente (7,8) aufweist, die unter Kraft in Anlage mit exzentrisch zur Drehachse (9) der Maschine umlaufenden Teilen einer Kurbelwelle gebracht werden, und daß die Stützelemente (7,8) beweglich an der umlaufenden Stützeinrichtung (4,5,6) und, als zweiseitige Hebel ausgebildet, um eine Achse parallel zur Drehachse (9) schwenkbar an der umlaufenden Stützeinrichtung (4,5,6) angeordnet sind derart, daß die Fliehkraft die Stützkraft mindestens unterstützt, wobei sowohl der Lünettenständer (27,28,29) als auch die umlaufende Stützeinrichtung (4,5,6) eine radial gerichtete, den Bereich der Drehachse (9) umfassende Öffnung (25) zur Entnahme und Einführung eines Werkstücks (11) aufweist.

2. Maschine nach Anspruch 1, dadurch gekennzeichnet, daß die Lünette (2) mit einem Antrieb (12-23) für die umlaufende Stützeinrichtung (5) ausgerüstet ist.

3. Maschine nach einem der Ansprüche 1 und 2, dadurch gekennzeichnet, daß die Stützelemente (7,8) lageveränderlich angeordnet sind.

4. Maschine nach mindestens einem der vorhergehenden Ansprüche 1 bis 3, dadurch gekennzeichnet, daß die Lünette (1) einen Unwuchtausgleich (24) an der umlaufenden Stützeinrichtung (4) aufweist.

5. Maschine nach mindestens einem der vorhergehenden Ansprüche 1 bis 4, dadurch gekennzeichnet, daß die umlaufende Stützeinrichtung (4,5,6) in einem Lünettenständer (27,28,29) um ihre Drehachse (9) drehbar gelagert und geführt angeordnet ist.

6. Maschine nach mindestens einem der vorhergehenden Ansprüche 1 bis 5, dadurch gekennzeichnet, daß die umlaufende Stützeinrichtung (4,5,6) an ihrer Umfangsfläche (30,31,32) von im Ständer (27,28,29) gelagerten und geführten Wälzkörpern (33,34) abgestützt wird.

7. Maschine nach mindestens einem der vorhergehenden Ansprüche 1 bis 7, dadurch gekennzeichnet, daß die Lünette (1,2,3) entlang der Drehachse (9) verstellbar angeordnet ist.

## Claims

1. Machine for the rotary broaching at least of connecting-rod bearings on crankshafts (11), comprising a device for receiving and for rotationally driving a crankshaft, at least one rotary broaching tool arranged to be brought into working contact with the workpiece, machine control means and at least one rest (1,2,3) with a rotatable support device (4,5,6), characterised in that the rotatable support device (4,5,6) comprises support members (7,8) which are brought forcibly into contact with parts of a crankshaft rotating eccentrically relative to the axis of rotation (9) of the machine, and in that the support members (7,8) are movable relative to the rotatable support device (4,5,6) and formed as double-armed levers, are arranged to be pivotable relative to the rotatable support device (4,5,6) about an axis parallel to the axis of rotation (9), the arrangement being such that the centrifugal force at least assists the supporting force, wherein both the stand (27, 28, 29) for the rest and also the rotatable support device (4,5,6) include a radially directed aperture (25) encompassing the region of the axis of rotation (9) for removing and introducing a workpiece (11).

2. Machine according to claim 1, characterised in that the rest (2) is equipped with a drive (12-23) for the rotatable support device (5).

3. Machine according to one of claims 1 and 2, characterised in that the support members (7,8) are adjustable in position.

4. Machine according to at least one of the preceding claims 1 to 3, characterised in that the rest (1) comprises an imbalance compensator (24) on the rotatable support device (4).

5. Machine according to at least one of the preceding claims 1 to 4, characterised in that the rotatable support device (4,5,6) is rotatably mounted and is guided in a stand (27, 28, 29) for rotation about its axis of rotation (9).

6. Machine according to at least one of the preceding claims 1 to 5, characterised in that the rotatable support device (4,5,6) is supported at its peripheral surface (30, 31, 32) by rolling bodies (33, 34) which are guided and borne in the stand (27, 28, 29).

7. Machine according to at least one of the preceding claims 1 to 6, characterised in that the rest (1,2,3) is arranged to be displaceable along the axis of rotation (9).

## Revendications

1. Machine destinée à brocher par rotation au moins des manetons d'un vilebrequin, comportant un dispositif pour recevoir et entraîner en rotation un vilebrequin, au moins un outil de brochage rotatif apte à être amené en contact opérationnel avec la pièce à usiner et une commande de machine, ainsi qu'au moins une lunette (1, 2, 3) munie d'un dispositif d'appui tournant (4, 5, 6), caractérisée en ce que le dispositif d'appui tournant (4, 5, 6) présente des éléments d'appui (7, 8) qui sont amenés contre des pièces d'un vilebrequin tournant de façon excentrique par rapport à l'axe de rotation (9) de la machine, et en ce que les éléments d'appui (7, 8) sont montés mobiles sur le dispositif d'appui tournant (4, 5, 6) et pivotants sur un axe parallèle à l'axe de rotation (9), en étant conçus comme des leviers à deux côtés, de sorte que la force centrifuge soutienne au moins la force d'appui, étant précisé que le support de lunette (27, 28, 29) et le dispositif d'appui (4, 5, 6) tournant présentent tous les deux une ouverture (25) orientée radialement et entourant la zone de l'axe de rotation (9), destinée à l'enlèvement et à l'introduction d'une pièce à usiner (11).

2. Machine selon la revendication 1, caractérisée en ce que la lunette (2) est équipée d'un entraînement (12-23) pour le dispositif d'appui tournant (5).

3. Machine selon l'une des revendications 1 et 2, caractérisée en ce que les éléments d'appui (7, 8) sont disposés à un emplacement variable.

4. Machine selon l'une au moins des revendications 1 à 3 précédentes, caractérisée en ce que la lunette (1) présente un équilibrage de balourd (24) au niveau du dispositif d'appui tournant (4).

5. Machine selon l'une au moins des revendications 1 à 4 précédentes, caractérisée en ce que le dispositif d'appui tournant (4, 5, 6) est monté et guidé pivotant sur son axe de rotation (9) dans le support de lunette (27, 28, 29).

6. Machine selon l'une au moins des revendications 1 à 5 précédentes, caractérisée en ce que le dispositif d'appui tournant (4, 5, 6) est supporté au niveau de sa surface périphérique (30, 31, 32) par des organes de roulement (33, 34) montés et guidés dans le support (27, 28, 29).

7. Machine selon l'une au moins des revendications 1 à 6 précédentes, caractérisée en ce que la lunette (1, 2, 3) est montée mobile le long de l'axe de rotation (9).
